# EUROPÄISCHE PATENTANMELDUNG

(11) **EP 1 251 677 A2**
(43) Veröffentlichungstag der Anmeldung: **23.10.2002**
(21) Anmeldenummer: 02008563.5
(22) Anmeldetag: 16.04.2002
(51) Int. Cl.: H04M 1/247, H04M 1/27

(54) **Telekommunikationsvorrichtung und zugehöriges Steuerungsverfahren**

(30) Priorität: 17.04.2001 DE 10118752
(71) Anmelder: Tenovis GmbH & Co. KG, 60362 Frankfurt am Main (DE)
(72) Erfinder: Hofmann, Jan, c/o TENOVIS GmbH & Co. KG, 60326 Frankfurt am Main (DE)
(74) Vertreter: Leson, Thomas Johannes Alois, Dipl.-Ing.

(57) **Zusammenfassung**

Es wird ein Verfahren zu Steuerung einer Telekommunikationsvorrichtung (100) vorgeschlagen, bei dem eine Eigenschaft eines von einer Bedienungsperson abgegebenen Eingangssignals, beispielsweise eine Tonhöhe oder eine Tondauer eines Tonsignal, empfangen und mit einem vorbestimmten Schwellenwert verglichen wird. In Abhängigkeit davon, ob die entsprechende Eigenschaft über oder unter dem Schwellenwert liegt, wird ein jeweiliges entsprechendes Ansteuerungssignal für einen von zumindest zwei Bedienvorgängen erzeugt. Durch einen Bedienvorgang werden beispielsweise Menüpunkte einer Bedienoberfläche (60) sequentiell durchgeschaltet, während durch einen anderen Bedienvorgang ein Menüpunkt ausgewählt wird. Durch die Auswahl des einen Menüpunkts kann ein anderer Menüpunkt aufgerufen werden oder eine bestimmte Operation der Telekommunikationsvorrichtung initialisiert werden. Des Weiteren wird eine entsprechende Telekommunikationsvorrichtung (100) vorgeschlagen.

## Beschreibung

### TECHNISCHES GEBIET

Die vorliegende Erfindung betrifft eine Telekommunikationsvorrichtung sowie ein Verfahren zur Steuerung der Telekommunikationsvorrichtung, und insbesondere eine Telekommunikationsvorrichtung und ein Verfahren zur Steuerung derselben, die eine verbesserte Ansteuerung von Leistungsmerkmalen der Telekommunikationsvorrichtung ermöglichen.

### ZUGRUNDELIEGENDER STAND DER TECHNIK

Bekannt ist, dass Telekommunikationsvorrichtungen bzw. TK-Vorrichtungen, wie beispielsweise einem TK-Endgerät wie einem Fernsprechgerät oder einem Bildschirmtext- oder Internetgerät, eine auf einer Anzeigeeinrichtung angezeigte Menübedienoberfläche aufweisen, mit deren Hilfe eine Bedienungsperson Leistungsmerkmale der TK-Vorrichtung (beispielsweise Ausführen von Telekommunikationsoperationen wie Anrufen, Rufweiterleitung, Notruf, Anzeigen von gespeicherten Daten wie Rufnummerlisten und dergleichen) aufrufen und ansteuern kann. Die Menüpunkte der Menübedienoberfläche werden dabei beispielsweise durch Eingaben in eine Tastatur oder durch spezifische Menübedientasten der TK-Vorrichtung eingegeben.

Ferner ist bekannt, dass bei TK-Vorrichtungen die Möglichkeit besteht, neben einer Steuerung durch Tasteneingabe auch eine Steuerung durch gesprochene Kommandos auszuführen. Zu diesem Zweck werden von der Bedienungsperson in einer Sprachsteuerungsbetriebsart der zu bedienenden TK-Vorrichtung spezifische Kommandos ausgesprochen (beispielsweise Zahlen für eine Rufnummerneingabe, ein Befehl "Wählen", und dergleichen), welche die TK-Vorrichtung über eine geeignete Eingabeeinrichtung empfängt. Diese Eingabeeinrichtung ist beispielsweise eine in der TK-Vorrichtung eingebaute Freisprecheinrichtung, die als Kommunikationsmittel beispielsweise bei einem Telefongespräch dient. Die empfangenen Kommandos werden in der TK-Vorrichtung ausgewertet, mit gespeicherten Wortmustern verglichen und die so bestimmten Befehle ausgeführt, wie beispielsweise ein Wählen der genannten Zahlen.

### DARSTELLUNG DER ERFINDUNG

Eine Aufgabe der vorliegenden Erfindung besteht darin, eine verbesserte TK-Vorrichtung sowie ein verbessertes Verfahren zur Ansteuerung der TK-Vorrichtung bereitzustellen.

Diese Aufgabe wird beispielsweise gelöst durch ein Verfahren zum Steuern einer Telekommunikationsvorrichtung, mit den Schritten Empfangen eines Eingangssignals, Bestimmen von Eigenschaften des Eingangssignals, Auswerten der bestimmten Eigenschaften des Eingangssignals anhand eines Schwellenwertes, Erzeugen eines Ansteuerungssignals für einen von zumindest zwei Bedienvorgängen auf der Grundlage der Auswertung der Eigenschaften des Eingangssignals und Ausführen des einen Bedienvorgangs in der Telekommunikationsvorrichtung.

Ferner wird die Aufgabe beispielsweise gelöst durch eine Telekommunikationsvorrichtung mit einer Empfangseinrichtung zum Empfangen eines Eingangssignals, einer Bestimmungseinrichtung zur Bestimmung von Eigenschaften des empfangenen Eingangssignals, einer Verarbeitungseinrichtung zur Auswertung und zum Vergleichen mit einem Schwellenwert der bestimmten Eigenschaften des empfangenen Eingangssignals sowie zur Erzeugung eines Ansteuerungssignals für einen von zumindest zwei Bedienvorgängen auf der Grundlage des Vergleichs des Schwellenwerts und der Eigenschaften des Eingangssignals und einer Anzeigesteuerungseinrichtung zur Verarbeitung des Ansteuerungssignals und zur Ausführung des einen von zumindest zwei Bedienvorgängen.

Weitere vorteilhafte Ausgestaltungen der Erfindung sind in den jeweiligen abhängigen Patentansprüchen angeführt.

Die Erfindung ist einfach auch in bereits bestehende TK-Vorrichtungen (TK-Endgerät, TK-Anlage) zu implementieren. Die zur Ausführung der Erfindung erforderlichen Hardwarekomponenten (Freisprechanlage oder dergleichen) sind oftmals bereits eingebaut und können einfach angepasst werden. Hierdurch ist ein kostengünstiger Einsatz der Erfindung möglich. Ferner sind umfangreiche Modifikationen bestehender Entwürfe für TK-Vorrichtungen nicht erforderlich.

Des Weiteren ermöglicht es die vorliegende Erfindung, Leistungsmerkmale einer TK-Vorrichtung auf einfache Weise anzusteuern. Insbesondere Personen mit einem motorischen Handikap und eingeschränkter Artikulationsfähigkeit werden in die Lage versetzt, Leistungsmerkmale entsprechender TK-Vorrichtungen zu nutzen.

Gemäß einer Ausgestaltung wird vorzugsweise ein Tonsignal von der Bedienungsperson als Eingangssignal verwendet. Dies bietet den Vorteil, dass Eingabeeinrichtungen wie eine Freisprecheinrichtung, die in TK-Vorrichtungen bereits vorhanden sind, verwendet werden können. Außerdem kann seitens der Bedienungsperson eine einfache Unterscheidbarkeit zwischen unterschiedlichen Eingangssignalen eingeübt werden.

Als zu bestimmende Eigenschaft des Eingangssignals wird beispielsweise die Tonhöhe des Tonsignals verwendet. In diesem Fall ist der Schwellenwert, der zur Auswertung des Eingangssignals verwendet wird, ein vorbestimmter Tonhöhenwert. Es ist auch möglich, als zu bestimmende Eigenschaft des Eingangssignals beispielsweise eine Tonsignaldauer des Tonsignals zu verwenden. In diesem Fall ist der Schwellenwert, der zur Auswertung des Eingangssignals verwendet wird, ein vorbestimmter Tonsignaldauerwert. Durch einfach zu unterscheidende Eigenschaften des Einganssignals kann eine einfache und schnelle Auswertung erfolgen. Außerdem wird es der Bedienungsperson erleichtert, unterschiedliche Befehle zu geben.

Die erzeugten Ansteuerungssignale (d.h. die unterschiedlichen Befehle) dienen beispielsweise dazu, zumindest zwei Bedienvorgänge anzusteuern. Die Bedienvorgänge betreffen dabei beispielsweise eine Ansteuerung von Menüpunkten auf einer Menübedienoberfläche. Hierdurch wird vorteilhafterweise der Bedienungsperson eine visuelle Anzeige von durch das Eingangssignal verursachten Operationen bzw. eine Auswahlmöglichkeit für unterschiedliche Ansteuerungsmöglichkeiten gegeben.

Ein erster der zumindest zwei Bedienvorgänge ist beispielsweise ein sequentielles Weiterschalten durch die Menüpunkte auf der Bedienoberfläche. Ein zweiter der zumindest zwei Bedienvorgänge ist beispielsweise eine Betätigung eines Menüpunkte, der zuvor durch den ersten der zumindest zwei Bedienvorgänge ausgewählt wurde. Wird ein Menüpunkt durch den zweiten der zumindest zwei Bedienvorgänge betätigt, erfolgt in der TK-Vorrichtung eine Initialisierung einer bestimmten, mit dem betätigten Menüpunkt verbundenen Operation der TK-Vorrichtung. Anders ausgedrückt, je nach Eigenschaft des Eingangssignals (beispielsweise größer oder kleiner als der vorbestimmte Schwellenwert) erfolgt beispielsweise eine Weiterschaltung durch Menüpunkte oder eine Betätigung eines (derzeit ausgewählten) Menüpunkts und Ausführung einer entsprechenden Operation.

### KURZE BESCHREIBUNG DER FIGUREN

Die Erfindung wird nachstehend anhand von Ausführungsbeispielen unter Bezugnahme auf die Zeichnung näher beschrieben. Es zeigen:
Fig. 1 ein Blockschaltbild einer TK-Vorrichtung gemäß einem Ausführungsbeispiel,
Fig. 2 ein Flussdiagramm zur Veranschaulichung eines Steuerungsverfahrens und
Fig. 3 eine Darstellung einer Bedienoberfläche der TK-Vorrichtung gemäß Fig. 1.

### BESCHREIBUNG DER BEVORZUGTEN AUSFÜHRUNGSBEIPIELE

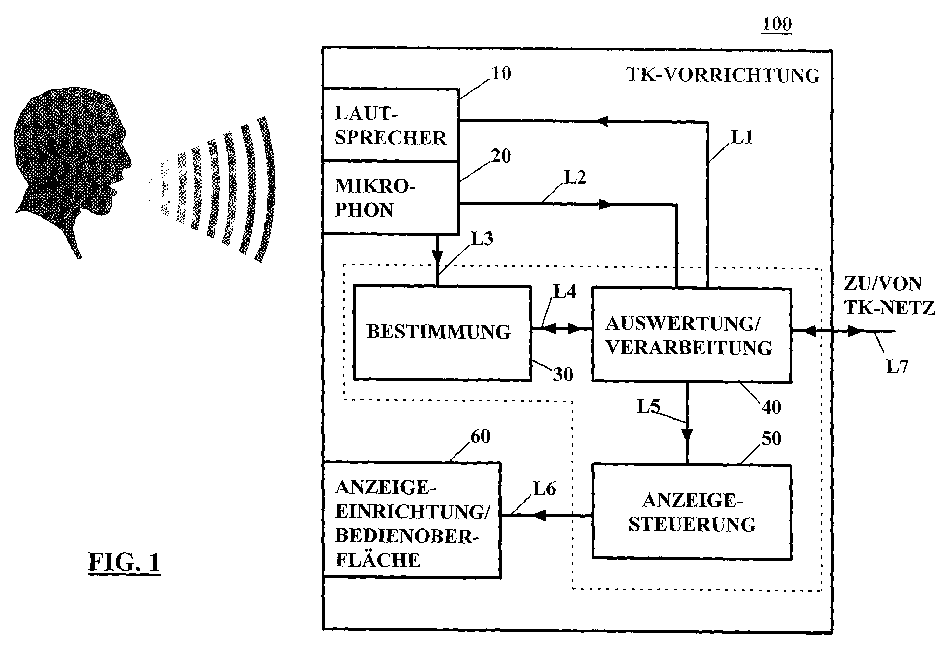

In Fig. 1 ist ein Blockschaltbild einer TK-Vorrichtung 100 gemäß einem Ausführungsbeispiel der vorliegenden Erfindung gezeigt.

Bezugszeichen 10 bezeichnet einen Lautsprecher und Bezugszeichen 20 ein Mikrophon. Der Lautsprecher 10 und das Mikrophon 20 bilden dabei eine Freisprecheinrichtung der TK-Vorrichtung 100. Das Mikrophon 20 empfängt von einer Bedienungsperson ausgegebene Tonsignale und wandelt diese zur Weiterverarbeitung in der TK-Vorrichtung 100 in elektrische Signale um. Erfolgt in der TK-Vorrichtung eine digitale Weiterverarbeitung, ist ein (nicht gezeigter) Analog-Digital-Wandler nachgeschaltet. Der Lautsprecher wandelt im Gegenzug zugeführte elektrische Signale in akustische Signale um, die von der Bedienungsperson wahrgenommen werden können.

Das Mikrophon 20 ist über eine Leitung L2 mit einer Verarbeitungseinrichtung 40 der TK-Vorrichtung 100 verbunden. Die Verarbeitungseinrichtung 40 ist beispielsweise eine zentrale Verarbeitungseinheit mit zugehörigen (nicht gezeigten) Speicher- und Berechnungseinheiten. Die Verarbeitungseinrichtung 40 übernimmt die allgemeine Steuerung der TK-Vorrichtung 100.

Das Mikrophon 20 ist ferner über eine Leitung L3 mit einer Bestimmungseinrichtung 30 verbunden. Die Bestimmungseinrichtung 30 dient dazu, bestimmte Eigenschaften des von dem Mikrophon empfangenen Tonsignals zu bestimmen. Dies kann beispielsweise die Bestimmung einer Tonhöhe, einer Tonlänge, einer Lautstärke des Tons oder dergleichen sein.

Die Verarbeitungseinrichtung 40 ist über eine Leitung L4 mit der Bestimmungseinrichtung 30 verbunden. Über die Leitung L4 werden von der Bestimmungseinrichtung 30 den bestimmten Eigenschaften des Eingangssignals (beispielsweise der Tonsignaldauer) entsprechende Signale an die Verarbeitungseinrichtung 40 gesendet, die diese auswertet. Ferner ist die Verarbeitungseinrichtung 40 über eine Leitung L7 mit einem externen Telekommunikationsnetz (TK-Netz) verbunden, über das die TK-Vorrichtung kommuniziert (beispielsweise Telefongespräche, verbale Dienste (Notrufdienst, Ansagedienst, Mailbox und dergleichen), Video-Telephonie, visuelle Dienste (Internet, Bildschirmtext und dergleichen), Telefonverwaltungsdienste (Rufumleitung) usw.). Zusätzlich ist die Verarbeitungseinrichtung 40 über eine Leitung L1 mit dem Lautsprecher 10 verbunden. Hierüber werden zur Umwandlung in akustische Signale bestimmte elektrische Signale gesendet, beispielsweise eine Rückmeldung von der Verarbeitungseinrichtung 40 selbst oder über die Leitung L7 empfangene, externe Kommunikationssignale bei einem Telefongespräch.

Bezugszeichen 50 bezeichnet eine Anzeigesteuerungseinrichtung, die über eine Leitung L5 mit der Verarbeitungseinrichtung 40 verbunden ist. In der Anzeigesteuerungseinrichtung 50 werden entsprechend Ansteuerungssignalen von der Verarbeitungseinrichtung 40 auf einer Anzeigeeinrichtung 60 anzuzeigende Inhalte erzeugt und verändert. Beispielsweise wird eine Menübedienoberfläche mit einer Vielzahl von Menüpunkten generiert und entsprechende Daten über eine Leitung L6 an die Anzeigeeinrichtung 60 weitergeleitet. Die Anzeigeeinrichtung 60 ist beispielsweise eine Flüssigkristall- bzw. LCD-Anzeigeeinrichtung. Diese kann neben der Anzeige der Menübedienoberfläche auch zur Anzeige von von dem TK-Netz empfangenen Informationen dienen, beispielsweise einer Internetseite oder eines Videotelephoniebilds.

Die Bestimmungseinrichtung 30, die Verarbeitungseinrichtung 40 und die Anzeigesteuerungseinrichtung 50 können als getrennte Einheiten ausgeführt sein. Es ist aber ebenso möglich, diese Einrichtungen (bzw. deren Funktionalität) in einer Einheit zu vereinen, wie es durch die gestrichelte Linie in Fig. 1 angezeigt ist.

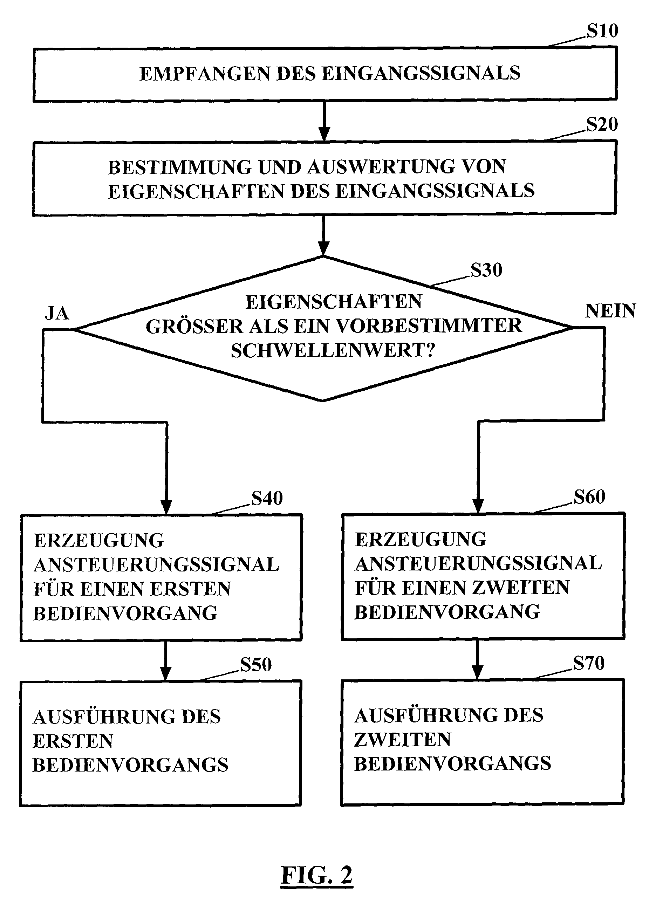

Nachstehend ist unter Bezugnahme auf Fig. 2 die Funktionsweise der in Fig. 1 gezeigten TK-Vorrichtung 100 beschrieben.

Wenn sich die TK-Vorrichtung 100 in einer Sprachsteuerungsbetriebsart befindet, werden von der Bedienungsperson geäußerte Tonsignale als Eingangssignal von dem Mikrophon 20 empfangen und in elektrische Signale gewandelt (Schritt S10). Das gewandelte Eingangssignal wird über die Leitung L3 zu der Bestimmungseinrichtung 30 gesendet, die eine spezifische Eigenschaft des Eingangssignals bestimmt (Schritt S20). Diese Eigenschaft ist beispielsweise wie vorstehend genannt die Tonsignaldauer.

Ein dem bestimmten Wert der Tonsignaldauer entsprechendes Signal wird von der Bestimmungseinrichtung 30 über die Leitung L4 an die Verarbeitungseinrichtung 40 gesendet. In der Verarbeitungseinrichtung 40 wird, gemäß diesem Beispiel, die Tonsignaldauer mit einem vorbestimmten Schwellenwert verglichen, der in einem (nicht gezeigten) Speicher der Verarbeitungseinrichtung 40 gespeichert ist (Schritt S30). Beträgt beispielsweise die empfangene Signaldauer 3 Sekunden und der Schwellenwert 1,5 Sekunden, entscheidet die Verarbeitungseinrichtung 40, dass die Tonsignaldauer des Eingangssignals größer ist (JA bei S30). Daraufhin wird entsprechend dieses Auswertungsergebnisses gefolgert, dass die Bedienungsperson einen ersten von zwei Bedienvorgängen ausführen lassen will, nämlich beispielsweise ein sequentielles Weiterschalten von einem Menüpunkt zu einem anderen Menüpunkt.

Die Verarbeitungsschaltung 40 erzeugt ein dem bestimmten ersten Bedienvorgang entsprechendes Ansteuerungssignal für die Anzeigesteuerungseinrichtung 50 (Schritt S40). Die Anzeigesteuerungseinrichtung 50 verarbeitet das Ansteuerungssignal und führt auf der auf der Anzeigeeinrichtung angezeigten Menübedienoberfläche ein entsprechendes Weiterschalten aus. Ferner verarbeitet die Verarbeitungsschaltung 40 den bestimmten Bedienvorgang (internes Weiterschalten zu nächstem Menüpunkt) und wartet auf das nächste Eingangssignal (Schritt S50).

Ist die bestimmte Signaldauer kleiner oder gleich dem Schwellenwert (beispielsweise Eingangssignaldauer 1 Sekunde), so wird in Schritt S30 NEIN bestimmt. Das heißt, die Verarbeitungseinrichtung 40 folgert, dass die Bedienungsperson einen zweiten Bedienvorgang ausführen will, nämlich beispielsweise eine Betätigung bzw. Auswahl des derzeitigen Menüpunkts.

Demzufolge erzeugt die Verarbeitungsschaltung 40 ein dem bestimmten zweiten Bedienvorgang entsprechendes Ansteuerungssignal für die Anzeigesteuerungseinrichtung 50 (Schritt S60). Die Anzeigesteuerungseinrichtung 50 verarbeitet das Ansteuerungssignal und führt bei dem auf der Anzeigeeinrichtung 60 angezeigten Menüpunkt ein Anzeigen einer Betätigung aus. Ferner verarbeitet die Verarbeitungsschaltung 40 den bestimmten Bedienvorgang, indem sie die mit dem derzeitigen Menüpunkt verbundene Operation in einem (nicht gezeigten) Speicher bestimmt, und führt die bestimmte Operation aus (Schritt S70). Dabei wird beispielsweise in eine weitere Menüpunktebene geschaltet oder eine spezifische Operation der TK-Vorrichtung (wie beispielsweise ein Verbindungsaufbau) durch die Verarbeitungseinrichtung 40 ausgeführt. Im Falle einer weiteren Menüpunktebene wartet die Verarbeitungseinrichtung 40 auf eine weitere Eingabe der Bedienungsperson.

Es ist ersichtlich, dass anstelle der Tonsignaldauer und des damit verbundenen Zeitschwellenwertes auch beispielsweise eine Tonfrequenz bzw. Tonhöhe und ein damit verbundener Frequenzschwellenwert verwendet werden kann.

Es ist zu beachten, dass die vorstehend genannte Sprachsteuerungsbetriebsart beispielsweise permanent eingestellt sein kann (stand-by-Betriebsart) oder durch Betätigen eines geeigneten Schalters (Druckschalter oder dergleichen) eingestellt werden kann.

Optional kann die Verarbeitungseinrichtung 40 über die Leitung L1 und den Lautsprecher 10 beispielsweise eine verbale Rückmeldung an die Bedienungsperson abgeben. Falls beispielsweise das empfangene Eingangssignal nicht korrekt auswertbar ist (beispielsweise, wenn das Tonsignal zu leise war, oder die Zeitdauer für eine Auswertung zu kurz war, oder dergleichen), kann die Bedienungsperson darauf aufmerksam gemacht werden und eine Wiederholung der Eingabe angefordert werden. Dies erfolgt beispielsweise mittels vorgespeicherter Sprachdaten, die von der Verarbeitungseinrichtung abgerufen werden (beispielsweise "bitte wiederholen" oder dergleichen). Äquivalent hierzu kann eine Fehlermeldung über die Anzeigeeinrichtung 60 angezeigt werden.

Wird durch das vorstehend beschriebene Steuerungsverfahren beispielsweise ein Telefongespräch initialisiert, d.h. eine abschließende Auswahl ist durch den zweiten Bedienvorgang getroffen worden, so kann die Verarbeitungseinrichtung 40 über die Leitung L4 ein Signal an die Bestimmungseinrichtung senden, das die Bestimmungseinrichtung 30 deaktiviert. Von dem Mikrophon 20 empfangene Tonsignale werden dann über die Leitung L2 an die Verarbeitungseinrichtung 40 übertragen, die diese dann beispielsweise an das TK-Netz über eine aufgebaute Verbindung weiterleitet. Es ist aber beispielsweise ebenso möglich, die Verarbeitung von Signalen von der Bestimmringseinrichtung 30 in der Verarbeitungseinrichtung 40 abzuschalten. Anders ausgedrückt, die Freisprecheinrichtung dient nach abschließender Auswahl lediglich der Kommunikation. Von dem TK-Netz über die Leitung L7 empfangene Sprachdaten werden von der Verarbeitungseinrichtung 40 über die Leitung L1 an den Lautsprecher 10 der Freisprecheinrichtung ausgegeben.

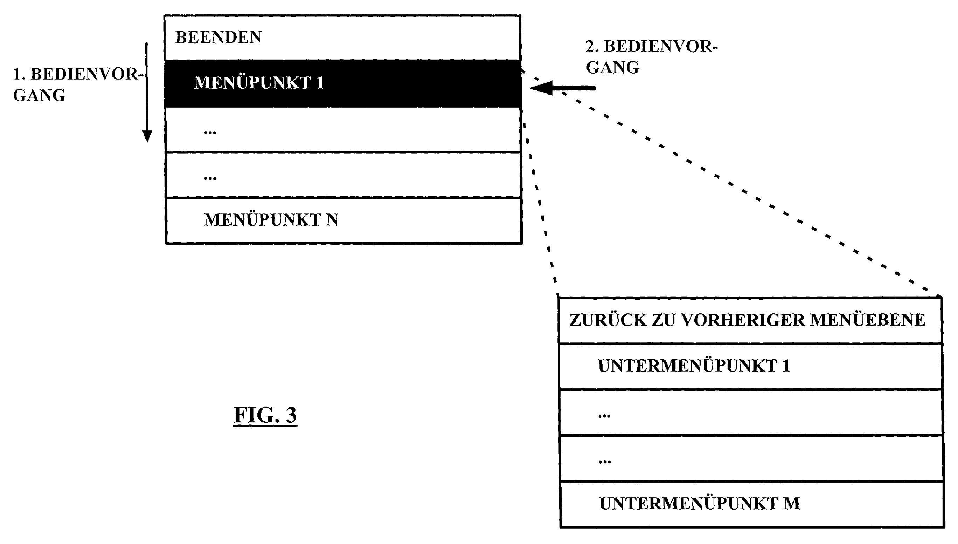

In Fig. 3 ist eine Menübedienoberfläche gezeigt, die beispielsweise auf der Anzeigeeinrichtung 60 durch die Anzeigesteuerungseinrichtung 50 angezeigt wird und durch die Verarbeitungseinrichtung 40 angesteuert wird.

Wie es in Fig. 3 veranschaulicht ist, wird durch den ersten Bedienvorgang von einem Menüpunkt zu dem nächsten Menüpunkt "weiter" geschaltet. Das heißt, jedes mal wenn die Bedienungsperson ein Tonsignal ausgibt, das beispielsweise länger als ein Schwellenwert andauert, gibt die Verarbeitungseinrichtung 40 ein Ansteuerungssignal aus, das ein Weiterschalten der Menüpunkte veranlasst. Der derzeit ausgewählte Menüpunkt wird beispielsweise invers dargestellt. Wird der letzte Menüpunkt N (die letzte Zeile) durch dieses Weiterschalten erreicht, so erfolgt bei einem weiteren Bedienvorgang zum Weiterschalten ein Rücksprung zu dem ersten Menüpunkt (der ersten Zeile; in diesem Fall der Menüpunkt "beenden").

Wird von der Bedienungsperson ein Tonsignal ausgegeben, das den zweiten Bedienvorgang "Auswahl" bzw. "Betätigung" anzeigt (beispielsweise ein kurzes Tonsignal), wird von der Verarbeitungseinrichtung 40 ein entsprechendes Ansteuerungssignal ausgegeben, das eine Anzeige der Betätigung veranlasst (beispielsweise ein kurzes Blinken). Gleichzeitig führt die Verarbeitungseinrichtung 40 die mit dem betätigten Menüpunkt verbundene Operation durch. In dem in Fig. 3 gezeigten Fall ist dies das Weiterschalten in eine weitere Menüpunktebene mit weiteren Untermenüpunkten 1 bis M. In dieser weiteren Menüpunktebene erfolgt eine äquivalente Verarbeitung wie vorstehend beschrieben. Ebenso ist, wie vorstehend beschrieben, eine Initialisierung einer Operation der TK-Vorrichtung möglich (beispielsweise ein Verbindungsaufbau usw.).

Obwohl in dem vorstehend beschriebenen Ausführungsbeispiel eine Ansteuerung zweier Bedienvorgänge ("weiter" und "Auswahl") beschrieben worden ist, ist es ersichtlich, dass durch die vorstehend beschriebene Erfindung auch eine andere Anzahl von Bedienvorgängen angesteuert werden kann. So kann beispielsweise noch ein weiterer Schwellenwert vorgesehen sein, mittels dessen eine Ansteuerung eines dritten Bedienvorgangs (beispielsweise "zurück" in der unter Bezugnahme auf Fig. 3 beschriebenen Menübedienoberfläche) durch die Verarbeitungseinrichtung 40 bestimmt wird. Zusätzliche Bedienvorgänge können ebenso implementiert werden. Dies macht die Bedienung der TK-Vorrichtung für eine Bedienungsperson komfortabler.

Zusätzlich kann auch vorgesehen sein, dass mehr als eine Eigenschaft ausgewertet wird. Das heißt beispielsweise, dass neben der Tonsignallänge auch eine Tonsignalhöhe (Frequenz) bestimmt und ausgewertet wird. So erfolgt die Auswahl beispielsweise bei einem kurzen tiefen und die Weiterschaltung bei einem langen hohen Tonsignal. Hierdurch kann eine sicherere Bestimmung erreicht werden.

In dem vorstehend beschriebenen Ausführungsbeispiel wird als Eingangssignal vorzugsweise ein Tonsignal von der Bedienungsperson verwendet. Es sind jedoch auch andere Eingangssignaltypen verwendbar. So kann beispielsweise ein Lichtsignal (beispielsweise durch eine Taschenlampe oder einen Lichtgriffel von der Bedienungsperson ausgegeben) verwendet werden, wobei äquivalent zu dem vorstehend beschriebenen Tonsignal eine Lichtsignaldauer oder eine Lichtfarbe (beispielsweise rot/grün) als Signaleigenschaft zur Auswertung verwendet werden. In diesem Fall wird als Eingangseinrichtung der TK-Vorrichtung beispielsweise eine Photodiode oder dergleichen verwendet. Der übrige Arbeitsablauf entspricht dann dem vorstehend beschriebenen.

Neben dem vorstehend genannten Schwellenwert, dessen Überoder Unterschreiten überprüft wird, kann gemäß einer Modifikation der Erfindung auch ein Vergleich mit einem Absolutwert erfolgen. Anders ausgedrückt, die bestimmte Eigenschaft der Eingangssignals wird mit gespeicherten Vergleichswerten verglichen. Stimmt das Eingangssignal mit einem Vergleichswert über, wird der entsprechende Bedienvorgang wird ausgeführt. Hierbei können auch Toleranzwerte berücksichtigt sein. Diese Modifikation ist insbesondere bei genau reproduzierbaren Eingangssignalen verwendbar, wie dem vorstehend genannten Lichteingangssignal.

Des Weiteren kann die erfindungsgemäße TK-Vorrichtung 100 die Sprachsteuerungsbetriebsart (oder eine äquivalente Lichtsteuerungsbetriebsart oder dergleichen) auch nach einer abschließenden Auswahl durch den zweiten Bedienvorgang ("Auswahl") in Schritt S70 aufrechterhalten. Dies ist beispielsweise von Vorteil, wenn der durch den Menüpunkt ausgewählte Dienst keine Sprachübertragung beinhaltet, beispielsweise ein visueller Dienst wie ein Internetdienst, oder ein Verwaltungsdienst wie eine Mailboxabfrage, oder dergleichen. Der Bedienungsperson wird dann über die erfindungsgemäße Steuerung ermöglicht, Bedienvorgänge auszuwählen bzw. Ansteuerungssignale zu erzeugen.

Ferner ist ersichtlich, dass die vorliegende Erfindung sowohl als Hardwarekomponenten in einer TK-Vorrichtung verwirklicht werden kann, als auch als Software für die Steuerungseinrichtung implementiert werden kann.

Wie es vorstehend beschrieben ist, wird ein Verfahren zu Steuerung einer Telekommunikationsvorrichtung 100 vorgeschlagen, bei dem eine Eigenschaft eines von einer Bedienungsperson abgegebenen Eingangssignals, beispielsweise eine Tonhöhe oder eine Tondauer eines Tonsignal, empfangen und mit einem vorbestimmten Schwellenwert verglichen wird. In Abhängigkeit davon, ob die entsprechende Eigenschaft über oder unter dem Schwellenwert liegt, wird ein jeweiliges entsprechendes Ansteuerungssignal für einen von zumindest zwei Bedienvorgängen erzeugt. Durch einen Bedienvorgang werden beispielsweise Menüpunkte einer Bedienoberfläche 60 sequentiell durchgeschaltet, während durch einen anderen Bedienvorgang ein Menüpunkt ausgewählt wird. Durch die Auswahl des einen Menüpunkts kann ein anderer Menüpunkt aufgerufen werden oder eine bestimmte Operation der Telekommunikationsvorrichtung initialisiert werden. Des Weiteren wird eine entsprechende Telekommunikationsvorrichtung 100 vorgeschlagen.

Es wird ein Verfahren zu Steuerung einer Telekommunikationsvorrichtung (100) vorgeschlagen, bei dem eine Eigenschaft eines von einer Bedienungsperson abgegebenen Eingangssignals, beispielsweise eine Tonhöhe oder eine Tondauer eines Tonsignal, empfangen und mit einem vorbestimmten Schwellenwert verglichen wird. In Abhängigkeit davon, ob die entsprechende Eigenschaft über oder unter dem Schwellenwert liegt, wird ein jeweiliges entsprechendes Ansteuerungssignal für einen von zumindest zwei Bedienvorgängen erzeugt. Durch einen Bedienvorgang werden beispielsweise Menüpunkte einer Bedienoberfläche (60) sequentiell durchgeschaltet, während durch einen anderen Bedienvorgang ein Menüpunkt ausgewählt wird. Durch die Auswahl des einen Menüpunkts kann ein anderer Menüpunkt aufgerufen werden oder eine bestimmte Operation der Telekommunikationsvorrichtung initialisiert werden. Des Weiteren wird eine entsprechende Telekommunikationsvorrichtung (100) vorgeschlagen.

## Patentansprüche

1. Verfahren zum Steuern einer Telekommunikationsvorrichtung (100), mit den Schritten:
Empfangen (S10) eines Eingangssignals,
Bestimmen (S20) von Eigenschaften des Eingangssignals,
Auswerten (S20, S30) der bestimmten Eigenschaften des Eingangssignals anhand eines Schwellenwertes,
Erzeugen (S40, S60) eines Ansteuerungssignals für einen von zumindest zwei Bedienvorgängen auf der Grundlage der Auswertung der Eigenschaften des Eingangssignals und
Ausführen (S50, S70) des einen Bedienvorgangs in der Telekommunikationsvorrichtung.

2. Verfahren nach Anspruch 1, wobei das Eingangssignal ein Tonsignal von einer Bedienungsperson ist.

3. Verfahren nach Anspruch 2, wobei die in dem Bestimmungsschritt (S20) bestimmte Eigenschaft eine Tonhöhe des Tonsignals ist und der in dem Auswerteschritt (S30) verwendete Schwellenwert ein vorbestimmter Tonhöhenwert ist.

4. Verfahren nach Anspruch 2, wobei die in dem Bestimmungsschritt (S20) bestimmte Eigenschaft eine Tonsignaldauer des Tonsignals ist und der in dem Auswerteschritt (S30) verwendete Schwellenwert ein vorbestimmter Tonsignaldauerwert ist.

5. Verfahren nach einem der vorhergehenden Ansprüche, wobei die erzeugten Ansteuerungssignale für die zumindest zwei Bedienvorgänge Menüpunkte auf einer Menübedienoberfläche ansteuern.

6. Verfahren nach Anspruch 5, wobei einer der zumindest zwei Bedienvorgänge ein sequentielles Weiterschalten durch die Menüpunkte ausführt (S40, S50) und der andere der zumindest zwei Bedienvorgänge eine Betätigung eines der Menüpunkte ausführt (S60, S70).

7. Verfahren nach Anspruch 6, wobei durch die Betätigung eines der Menüpunkte durch den anderen der zumindest zwei Bedienvorgänge (S60, S70) eine bestimmte Operation der Telekommunikationsvorrichtung initialisiert wird.

8. Telekommunikationsvorrichtung (100) mit
einer Empfangseinrichtung (20) zum Empfangen eines Eingangssignals,
einer Bestimmungseinrichtung (30) zur Bestimmung von Eigenschaften des empfangenen Eingangssignals,
einer Verarbeitungseinrichtung (40) zur Auswertung und zum Vergleichen mit einem Schwellenwert der bestimmten Eigenschaften des empfangenen Eingangssignals sowie zur Erzeugung eines Ansteuerungssignals für einen von zumindest zwei Bedienvorgängen auf der Grundlage des Vergleichs des Schwellenwerts und der Eigenschaften des Eingangssignals und
einer Anzeigesteuerungseinrichtung (50) zur Verarbeitung des Ansteuerungssignals und zur Ausführung des einen von zumindest zwei Bedienvorgängen.

9. Vorrichtung nach Anspruch 8, wobei das Eingangssignal ein Tonsignal von einer Bedienungsperson ist.
